Europäisches Patentamt

European Patent Office

Office européen des brevets

(11) Publication number: **0 411 222 A1**

# EUROPEAN PATENT APPLICATION

(21) Application number: **89310199.8**

(22) Date of filing: **05.10.89**

(51) Int. Cl.⁵: **B64D 17/04, B64D 17/72**

(30) Priority: **31.07.89 US 386722**

(43) Date of publication of application:
**06.02.91 Bulletin 91/06**

(84) Designated Contracting States:
**AT BE CH DE ES FR GB GR IT LI LU NL SE**

(71) Applicant: **Tsay, Ing-Lang**
**No. 110, Kienkwo Street**
**Hua Lien Hsien(TW)**

(72) Inventor: **Tsay, Ing-Lang**
**No. 110, Kienkwo Street**
**Hua Lien Hsien(TW)**

(74) Representative: **Thomson, Roger Bruce et al**
**POLLAK MERCER & TENCH Eastcheap**
**House Central Approachach**
**Letchworth Hertfordshire SG6 3DS(GB)**

(54) **Multi-layered pneumatic parachute.**

(57) A multi-layered pneumatic life-saving parachute comprises a cylinder (300 of compressed gas which is connected by a conduit (40) to a plurality of envelopes (111, 121, 131) which serve as canopies (11, 12,13). When an outlet valve of the cylinder (30) is opened, the compressed gas inflates the envelopes and fully opens the parachute. The lowest shroud lines (17) of the parachute are connected to securing rings (21) on a jacket (20) which carries the compressed gas cylinder (30).

FIG.1

## MULTI-LAYERED PNEUMATIC PARACHUTE

SPECIFICATION

This invention relates to parachutes, and is particularly concerned with multi-layered pneumatic life-saving parachutes.

When jumping from an aircraft with a parachute, the parachutist must count off a period of time before operating the mechanism which releases the parachute for opening. Sometimes, at the end of this period of time, the parachutist is falling through space at high speed and may be unable to release the parachute because of fear or because of some fault in the parachute, thereby resulting in injury or death. Furthermore, ordinary parachutes have been used as a means for escaping from high buildings when there is a threat to life. However, only in the case of skyscrapers can the ordinary parachute function satisfactorily, because the parachute needs a considerable volume of air to expand to its full dimensions.

Various types of parachute incorporating means to expedite the entry of air into the parachute are to be found in De Witt's US Patent 1,705,909, Smith et al's US Patent 4,562,981 and McNally's US Patent 4,634,080.

De Witt discloses a parachute having a plurality of differently sized sustaining sheets, each sustaining sheet having a fluted border to expedite the entry of air into the folds of the sheets.

Smith et al shows a cylinder of compressed gas with conduits connected to a plurality of triangular inflatable gussets which are provided on the canopy, and with one or more valves for releasing the gas from the cylinder through the conduits to the inflatable gussets for the opening of the parachute.

McNally discloses a plurality of parafoils assembled in a multi-layered vertical configuration to provide an improved directly vertical lift without the less efficient angular lift of the conventional parafoil where the lifting power is horizontally dispersed.

It is an object of the present invention to provide a multi-layered pneumatic life-saving parachute incorporating airtight envelopes designed to be expanded by gas, and utilising air resistance as an opposing force to gravity.

It is a further object of the present invention to provide a multi-layered pneumatic life-saving parachute which can be inflated to an open state before use, and which can thus be utilised as a means of escape from high buildings.

It is a further object of the present invention to provide a multi-layered pneumatic life-saving parachute wherein a cylinder of compressed gas is connected to air-tight envelopes by conduits so that the envelopes can be rapidly inflated to open the parachute.

In accordance with the present invention there is provided a multi-layered pneumatic life-saving parachute as claimed in claim 1.

Various other preferred features of the invention are set out in the subsidiary claims hereinafter.

In order that the invention may be more fully understood, a number of preferred embodiments of parachute in accordance with the invention will now be described by way of example and with reference to the accompanying drawings, in which:

Fig. 1 is a perspective view of a first embodiment of parachute in accordance with the present invention;

Fig. 2 is a side view, partly in section, of the air inlet of the airtight envelope and of the air outlet of the conduit for the parachute of Fig. 1;

Fig. 3 is a front view of the jacket of the parachute shown in Fig. 1;

Fig. 4 is a side view, partly in section, showing the outlet valve of the compressed air cylinder of the parachute of Fig. 1;

Fig. 5 is a perspective view of a second embodiment of parachute in accordance with the present invention;

Fig. 6 is a perspective view illustrating how the strip envelopes are connected to the conduit;

Fig. 7 is a perspective view of a third embodiment of parachute in accordance with the present invention; and,

Fig. 8 is a perspective view of a fourth embodiment of parachute in accordance with the present invention.

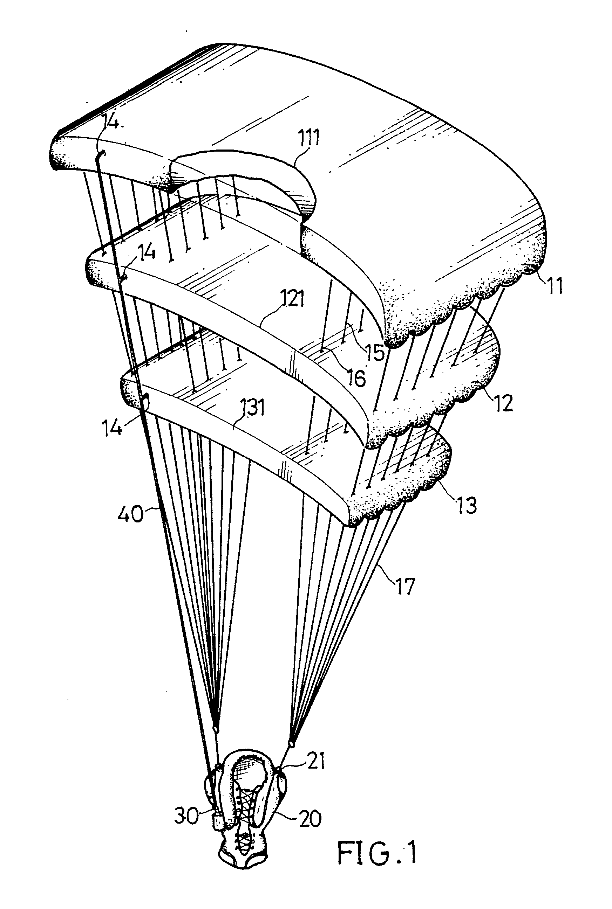

Referring first to Fig. 1, this shows a parachute comprising a plurality of superposed canopies, three such canopies being shown and indicated at 11, 12 and 13, a jacket 20, a cylinder 30 of compressed gas attached to the jacket 20 and a conduit 40 extending from the gas cylinder to the canopies. The three canopies 11, 12 and 13 are arranged in sequence with the smallest at the bottom and with the largest at the top, although it should be understood that their relative positions could be interchanged, and that a greater number than three canopies, or even just two canopies, could be used within the scope of the present invention.

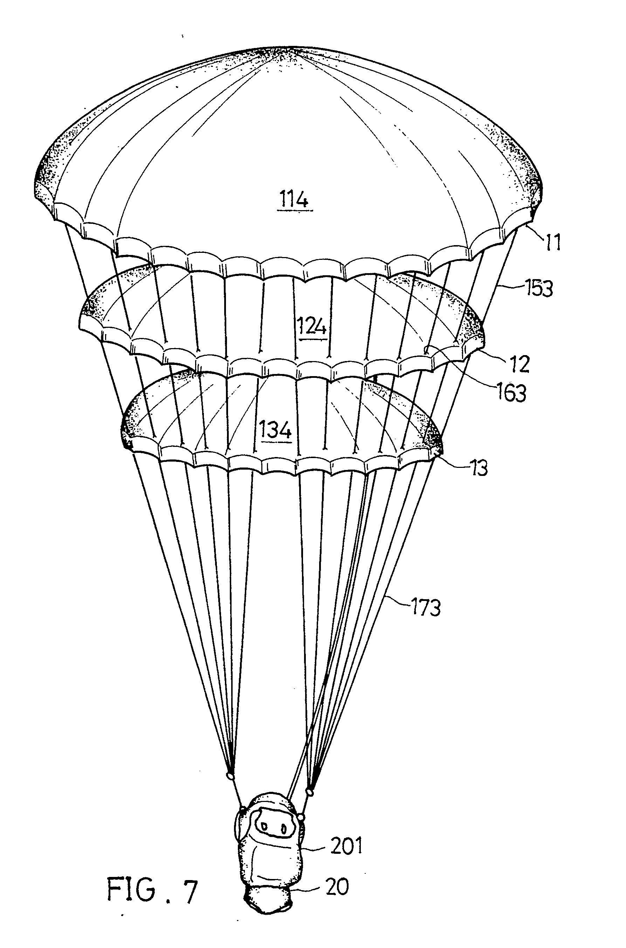

The canopies 11, 12 and 13 are all airtight envelopes 111, 121 and 131 which are made from an impervious foldable material. Each envelope has an inlet 14 disposed at one side of the envelope. These inlets 14 are connected to the cylinder 30 of compressed gas by way of the conduit 40, thus permitting the gas, contained in the cylinder 30 to enter the envelopes 111, 121 and 131 and thus open the canopies 11, 12 and 13. When not in use, the canopies 11, 12 and 13 are folded up and can be packed in a parachute bag 201 as shown in Fig. 7. The underside of each of the parachute canopies is equipped with multiple, parallel shroud lines 15 which extend downwards and which are tied to respective securing rings 16 which are disposed on the upper surfaces of the canopies below the top canopy. The shroud lines 17 of the lowest canopy extend downwards and are tied to ring members 21 provided on the jacket 20.

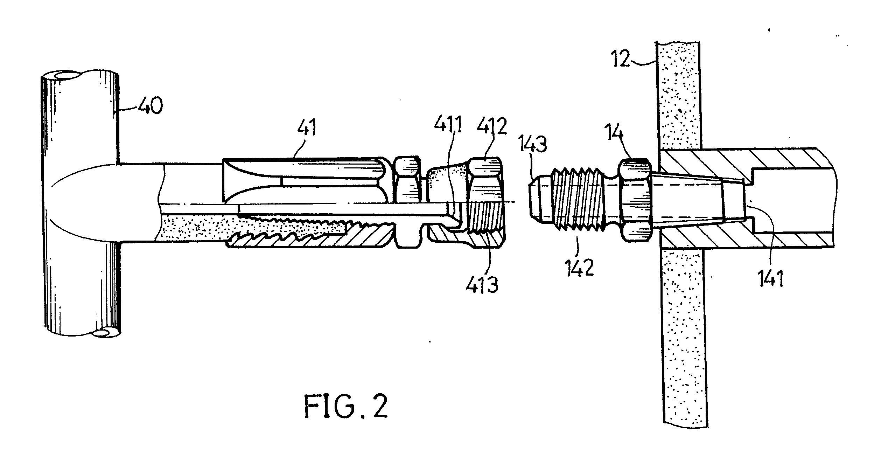

Referring now to Fig. 2, it can be seen that the inlet 14 of the envelope comprises a check valve having a thin plate 141 whereby the gas contained in the conduit 40 can only flow in and cannot flow out. The mechanism also comprises means to prevent the outlet 41 of the conduit 40 from slipping off, thereby avoiding leakage and danger. The external circumference of the inlet 14 is formed with a screw thread 142 and with a frusto-conical end face 143. The internal circumference of the outlet 41 of the conduit 40 is formed with a conical face 411 corresponding to the frusto-conical face 143. A nut 412 having a female thread 413 is provided on the end of the outlet 41 so that when the outlet 41 is fitted to the inlet 14 the two tapered faces 143 and 411 abut against each other, whereafter the nut 412 is screwed on the thread 142 in order to bring the two tapered faces 143 and 411 into tight engagement. Thus, a tape seal is not necessary and connection and disconnection of the inlet/outlet can be accomplished quickly.

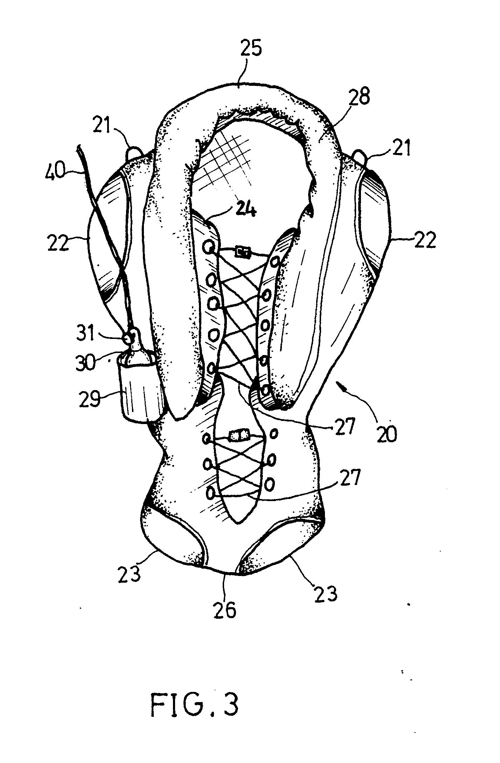

Referring now to Fig. 3, this shows a jacket 20 for connection with the lower shroud lines 17 and having two arm openings 22, two leg openings 23 and a chest opening 24. The chest opening 24 extends from the collar 25 to a portion adjacent to the crotch 26. Two sides of the chest opening 24 are equipped with fastening cords 27 capable of fitting the jacket 20 securely on the user so as to resist violent movements. Two ring members 21 are disposed on the respective shoulders of the jacket 20 in order to secure the shroud lines 17 thereto. The jacket 20 is also provided with a safety belt 28 extending along two sides of the chest opening 24 to act as a buoy in case the user drops into water. A pocket 29 for the gas cylinder 30 is disposed on the chest portion 24 of the jacket 20 to contain the cylinder of compressed gas. The cylinder 30 is located in a position which permits the user conveniently to open the outlet valve 31 on the cylinder 30. A parachute bag 201 is arranged on the back portion of the jacket 20 for storage of the parachute, as shown in Fig. 7.

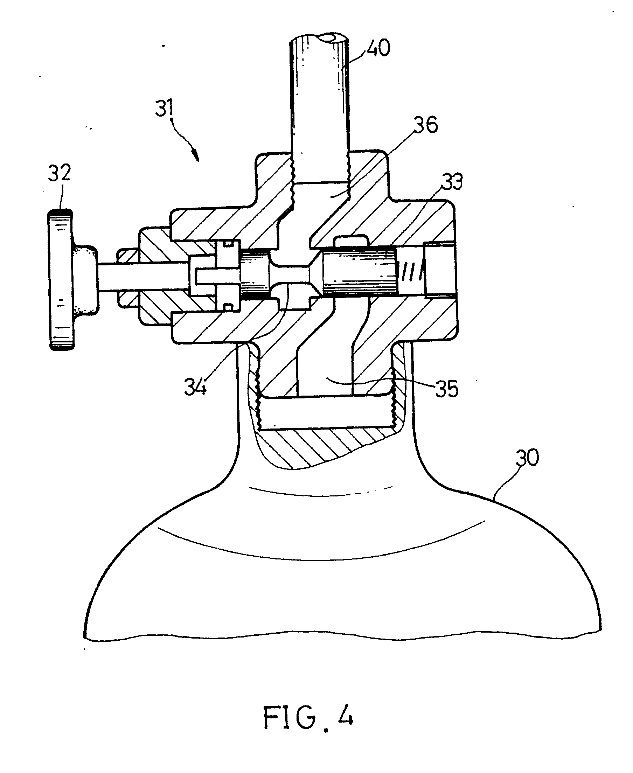

Referring now to Fig. 4, the gas cylinder 30 is shown as having an outlet valve 31 at its upper end. The outlet valve 31 is a flow-controlling valve such that by rotating a handle 32 the valve stem 33 is displaced. The central portion of the valve stem 33 is formed with a smaller diameter portion 34 which serves as a regulating portion. The position of the regulating portion 34 between an inlet conduit 35 and an outlet conduit 36 determines the amount of compressed gas which enters the conduit 40.

In operation, the outlet valve 31 of the cylinder 30 is opened by the parachutist, permitting the compressed gas to flow through the conduit 40 and inflate the envelopes 111, 121 and 131. As a result, the envelopes 111, 121 and 131 quickly expand. Because the density of the gas contained in the cylinder 30 is lighter than that of the air, the envelopes 111, 121 and 131 are inflated and rise upwards in order to tension the shroud lines 15 and 17. The parachutist can then jump and make the parachute drop slowly downwards. Consequently, the air immediately enters the spaces between the envelopes and exerts a resistance force on each envelope. Therefore, the wind force-resistant area of the parachute of the present invention is greatly increased. The maximum envelope area is about twice the length of two extended arms, and thus the space which the parachute occupies is relatively small.

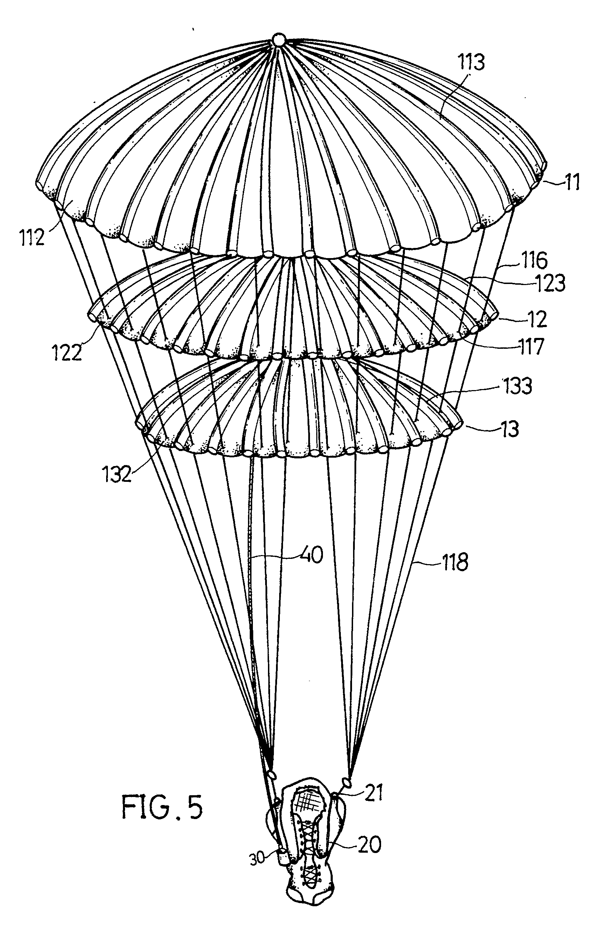

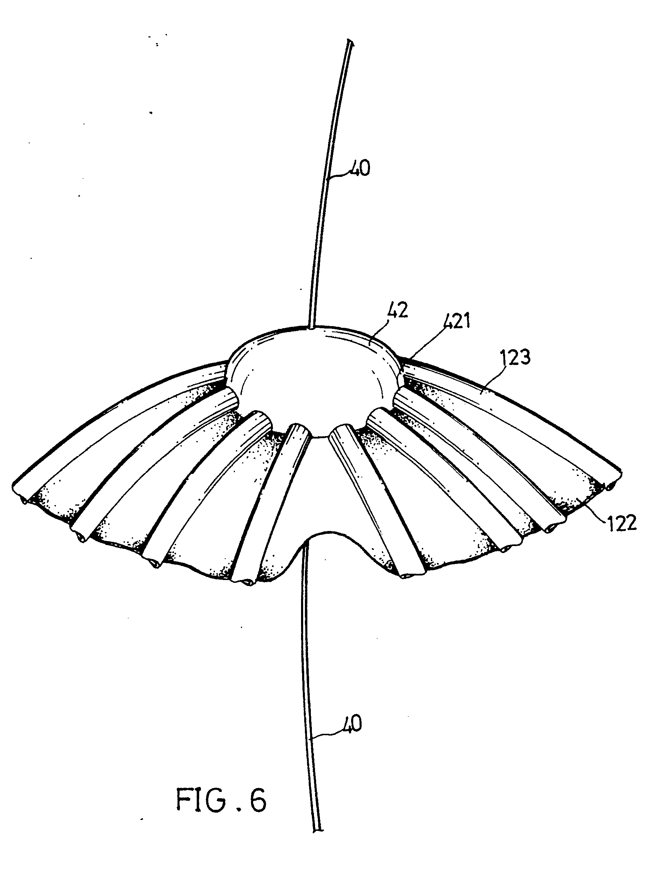

Referring now to Figs. 5 and 6, these show the second embodiment of parachute. Here, the canopies 11, 12 and 13 are substantially circular sheets 112, 122 and 132 each provided with radially disposed, airtight strip envelopes 113, 123 and 133. Towards the centre of each circular sheet the strip envelopes 113, 123 and 133 are in communication with a hollow chamber 42 which is disposed at the centre of each circular sheet. The gas conduit 40 is connected to the bottom of the top chamber 42 and to the top and bottom of each of the lower chambers 42. The periphery of each of the chambers 42 is provided with a plurality of outlets 421 which communicate with the individual strip envelopes. The shroud lines 116 are disposed around the circumference of the circular sheets and extend downwards where they are tied to securing rings 117 disposed on the next lower circular sheet. The shroud lines 118 of the lowest sheet are divided into two groups which are respectively tied to ring members 21 on the jacket 20.

A third embodiment of parachute in accordance with the invention is shown in Fig. 7. Here the canopies 11, 12 and 13 are circular envelopes 114, 124 and 134. A plurality of shroud lines 153 are arranged around the periphery of the bottom surface of each envelope and are tied to securing rings 163 which are equispaced on the next lower envelope. The lowest shroud lines 173 extend downwards and are tied to the ring members on the jacket 20. Inlets (not shown in Fig. 7) are provided in the side surfaces of each envelope 114, 124 and 134 for connection with the gas conduit 40 in a manner similar to that shown in Fig. 1.

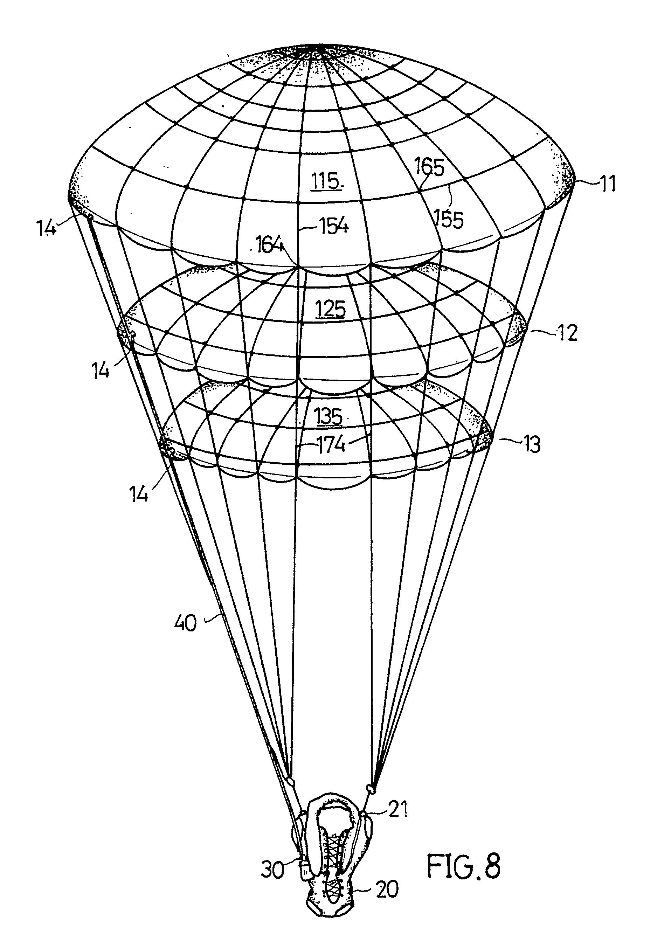

A fourth embodiment of parachute in accordance with the invention is shown in Fig. 8. Here the canopies 11, 12 and 13 are formed as circular envelopes 115, 125 and 135. Each envelope is provided with a plurality of cords 154 which extend radially at equal spacings from the centre of the envelope to securing rings 164 located on the circumference of the envelope. These cords 154 are associated with the shroud lines 174 which link the envelopes and which are tied to the ring members 21 on the jacket 20. A set of circular cords 155 of different diameters are disposed on each envelope and pass through a set of securing rings 165 located at the junction points between the circular cords 155 and the radial cords 154. The circular cords 155 are fixedly secured to the envelopes as reinforcements to increase the tensile strength of the envelopes. Each envelope 115, 125 and 135 is also provided with an inlet 14 at the side surface thereof for connection with the gas conduit 40.

**Claims**

1. A multi-layered pneumatic life-saving parachute comprising:
a plurality of superposed canopies having airtight envelopes, each said envelope being provided with a gas inlet, and shroud lines linking said canopies and secured thereto;
a jacket having arm openings, leg openings and a front opening extending from a collar portion to a crotch portion, the sides of the front opening being provided with fastening means, a shoulder portion of the jacket being equipped with securing means for connection with the shroud lines from the lowest canopy, a pocket for a gas cylinder provided on the jacket, and a bag on the back portion of the jacket for receiving the canopies when folded;
a cylinder containing compressed gas adapted to be located in said pocket and having an outlet valve; and
flexible conduit means connected at one end to said outlet valve and having communication through respective outlets to said inlets of said envelopes.

2. A parachute as claimed in claim 1, wherein said canopies are circular sheets having radial, airtight strip envelopes and a central chamber connected to said conduit means, the periphery of each said chamber being provided with outlets in communication with said strip envelopes, wherein the shroud lines are disposed at the periphery of the canopies and extend downwards to securing rings on the next lower canopy, with the shroud lines from the lowest canopy being divided into two groups which are respectively secured to said securing means on said jacket.

3. A parachute as claimed in claim 1, wherein said canopies are closed circular airtight envelopes, and said shroud lines are disposed at the periphery of the canopies and extend downwards for securement to securing rings on the next lower canopy, with the shroud lines from the lowest canopy being divided into two groups which are respectively secured to said securing means on said jacket, and wherein the side of each said envelope is provided with an inlet for connection to an outlet of said conduit means.

4. A parachute as claimed in claim 1, wherein said canopies are closed circular envelopes, and wherein a first plurality of cords are disposed radially at equal spacings on said envelopes and are fastened to securing means located at the periphery of each said envelope, with said shroud lines extending between the securing means of the respective envelopes and the securing means on said jacket, and wherein a said plurality of cords are arranged in a circular array at different diameters on each of said canopies and pass through securing rings located on the envelopes at the junction points between the radially extending cords and said circularly arranged cords.

FIG.1

FIG. 2

FIG.3

FIG. 4

8

FIG. 5

FIG.6

FIG . 7

FIG.8

European
Patent Office

**EUROPEAN SEARCH
REPORT**

Application Number

**EP 89 31 0199**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-B-3 878 34 (REBHAN) <br> * Whole document * | 1 | B 64 D 17/04 <br> B 64 D 17/72 |
| Y | FR-A-6 798 72 (KELLER) <br> * Page 1, lines 23-31 * | 1 | |
| A | | 2 | |
| A | FR-A-8 351 86 (DESMOND) <br> * Page 1, lines 38-42 * | 1 | |
| A | DE-U-8 903 279 (MANFRED) <br> * Whole document * | 1 | |

| | |
|---|---|
| | TECHNICAL FIELDS SEARCHED (Int. Cl.5) |
| | B 64 D |

The present search report has been drawn up for all claims

| Place of search | Date of completion of search | Examiner |
|---|---|---|
| The Hague | 05 November 90 | HAUGLUSTAINE H.P.M. |